# EUROPÄISCHE PATENTSCHRIFT

(11) **EP 2 059 464 B1**
(45) Veröffentlichungstag und Bekanntmachung des Hinweises auf die Patenterteilung: **16.05.2012**
(21) Anmeldenummer: 07801665.6
(22) Anmeldetag: 15.08.2007
(51) Int. Cl.: B65G 47/14, B65G 47/84

(54) **VORRICHTUNG ZUM AUSTRAGEN VON LÄNGLICHEN, GROBSCHÜTTFÄHIGEN PRODUKTE**
DEVICE FOR DISCHARGING ELONGATE, COARSE BULK PRODUCTS
DISPOSITIF POUR DÉVERSER DES PRODUITS ALLONGÉS POUVANT ÊTRE DÉCHARGÉS EN MASSE

(30) Priorität: 15.08.2006 DE 102006038321; 24.11.2006 DE 102006055962
(43) Veröffentlichungstag der Anmeldung: 20.05.2009
(60) Teilanmeldung: 10005616.7
(73) Patentinhaber: SIDEL PARTICIPATIONS, S.A.S., 76930 Octeville-sur-Mer (FR)
(72) Erfinder: KLAIBER, Franz, 78564 Wehingen (DE); NOVAK, Peter, CH-8274 Tägerwilen (CH)
(74) Vertreter: Weiss, Peter
(86) Internationale Anmeldenummer: PCT/EP2007/007201
(87) Internationale Veröffentlichungsnummer: WO 2008/019836

(56) Entgegenhaltungen:
- EP-A- 0 093 015
- WO-A-2006/084831
- WO-A-2007/028627
- DE-A1- 3 626 734
- DE-U- 1 953 974
- US-A- 3 575 276

## Beschreibung

Die Erfindung betrifft eine Vorrichtung zum Austragen von länglichen, grobschüttfähigen Produkten aus einem Behälter, insbesondere von PET-Flaschen-Rohlingen (Preforms) aus einem Schüttguttrichter mit einer Austragsöffnung, wobei der Austragsöffnung eine rotierende Scheibe zugeordnet ist.

### STAND DER TECHNIK

Viele Produkte werden, bevor sie weiter verarbeitet oder behandelt werden, häufig in grösseren Behältern angeordnet zwischengelagert. Dies gilt beispielsweise für Kopse in der Textilindustrie aber insbesondere auch für PET-Rohlinge, wie sie zur Herstellung von Plastikflaschen im Blasformverfahren benötigt werden. Entsprechende Behälter dienen der Lagerung der Produkte, insbesondere der Preforms oder der Bevorratung von weiterverarbeitenden Maschinen. Viele dieser Behälter haben wiederkehrende Gestaltungsmerkmale und sind als Schüttguttrichter ausgebildet. Diese Schüttguttrichter weisen von oben nach unten einen Grossquerschnitt und einen konischen Übergang zu einem Kleinquerschnitt sowie eine Austrittsöffnung auf.

Die auszutragenden Produkte und insbesondere die Preforms sind meist länglich und haben somit eine sperrige und für die Austragung unvorteilhafte Form. Dies führt bei der Entleerung der Behälter häufig zu Problemen, da die Preforms derart ineinander verkeilen, dass sie nicht nachrutschen bzw. Brücken bilden. Oder aber es kommt zu lawinenartigen Austritten, da zuviel Produkte auf einmal durch die Austragsöffnung austreten. Somit ist die kontrollierte Austragung und die Dosierung ein grosses Problem bei der Weitergabe von gespeicherten Preforms, besonders wenn die Querschnittsfläche der Austragsöffnung kleiner ist als der Grossquerschnitt des Behälters.

Aus der DE 1 953 974 U ist eine Vorrichtung zum orientierten Aneinanderreihen von unter sich gleichen, ungeordnet zugeführten Gegenständen, insbesondere Ampullen, bekannt. Dabei ist unter einem Behälterauslauf eine sich drehende Scheibe angebracht.

### AUFGABE

Aufgabe der vorliegenden Erfindung ist die Schaffung einer Vorrichtung der o.g. Art, welche eine einfach wirkende, schonende in der Menge schnell variierende Dosierung und Weitergabe oder Absperrung des Produktstromes ermöglicht.

### LÖSUNG DER AUFGABE

Zur Lösung der Aufgabe führt, dass zwischen Austragsöffnung und Scheibe eine Blende vorgesehen ist, die eine Ringöffnung (16) (rund oder polygonartig) zwischen Austragsöffnung (3) und Scheibe (5) in ihrer Weite (w) verändert.

Die rotierende Scheibe bedeutet ein aktives Element, mit dem die Produkte und insbesondere die Preforms aus dem Behälter ausgetragen werden. Bevorzugt handelt es sich um eine drehzahlgesteuerte, rotierende Scheibe, auf der in radialer Richtung Aufbauten angeordnet sind, welche die Austragung sicherstellen. Die Möglichkeit der Änderung der Drehzahl der rotierenden Scheibe eröffnet auch die Möglichkeit, die Menge der auszutragenden Preforms exakt zu steuern. Wird die Scheibe in höhere Drehzahlen versetzt, erhöht sich auch die Austragsmenge. Wird die Scheibe stillgesetzt, werden auch keine Preforms ausgetragen, die Austragsöffnung ist gesperrt.

Die Aufbauten auf der Oberfläche der Scheibe bewirken, dass Preforms quasi aus der Austragsöffnung ausgekämmt werden. Hierbei hat es sich als ratsam erwiesen, die Aufbauten exzentrisch anzuordnen, wodurch ein Führen der Preforms nach aussen verbessert wird. Diese Aufbauten können beispielsweise Wandstreifen sein, die radial gerade oder gekrümmt ausgebildet sind. Bei der Wahl einer Krümmung sollte darauf geachtet werden, dass diese der Drehrichtung nachlaufend ausgebildet ist, wodurch ein radiales Fördern der Preforms unterstützt wird.

Ein weiteres Merkmal der vorliegenden Erfindung besteht darin, dass die vertikale Öffnungsweite einer Ringöffnung, rund oder polygonartig, zwischen Austragsöffnung und Scheibe veränderbar ist. Hierdurch kann unterschiedlichen Formen von auszutragenden Produkten Rechnung getragen werden. Je dicker bzw. länger das auszutragende Produkt ist, um so grösser sollte die Öffnungsweite sein. Dies wird durch die Blende gewährleistet, welche, ggf. auf einem Stutzen, verschiebbar angeordnet ist, wobei dieser Stutzen gleichzeitig auch die Austragsöffnung ausbildet bzw. umfängt.

Unterhalb der Scheibe ist bevorzugt eine Verteilfläche vorgesehen, durch welche die Produkte und insbesondere die Preforms vereinzelt werden können. Eine derartige Vorrichtung ist beispielsweise in der PCT/EP2006/050682 beschrieben, auf die besonders Bezug genommen wird.

In der Praxis hat sich herausgestellt, dass durch die rotierende Scheibe eine sanft drehende dynamische Säule aus Preforms erzeugt wird, die sich ins Innere des Behälters fortpflanzen und das Nachrutschen der Preforms gewährleistet. Hier ist zusätzlich vorgesehen, dass mit der drehenden Scheibe auch ein Rührfinger, beispielsweise ein getwisteter Rührstab, verbunden ist, der durch die Austragsöffnung in den Behälter eingreift. Dieser Rührstab weist eine Steigung auf und wird in eine derartige Drehrichtung versetzt, dass eine Aufwärtsbewegung des Schüttgutes bewirkt wird, was einen Brückenbau des Schüttgutes vermeidet bzw. vorhandene Brücken auflöst und das Nachrutschen sichert.

Bei einer derartigen Vorrichtung ist die Ausnutzung des Schüttgutbehälters ideal, da das gesamte Behältervolumen für die Speicherung genützt werden kann. In Gegensatz zum Stand der Technik brauchen hier keine volumenmindernden Schikanen zur Verhinderung des Brückenbaus eingebaut zu werden. Der Austrag erfolgt kontrolliert, ein lawinenartiger Austrag ist nicht möglich. Der Austrag des Schüttgutes erfolgt unabhängig von dem Druck auf die rotierende Scheibe, womit eine gleichmässige Austragung über das gesamte Füllspektrum und die Füllhöhe des Behälters gewährleistet ist.

Die auszutragenden Produkte können sich auch nicht zwischen Austragbändern und stillstehenden Teilen verklemmen, was sonst zu Störungen führte.

Insbesondere durch die Steuerung der Drehzahl der drehenden Scheibe ergibt sich eine sehr exakte und schonende Dosierung, wobei die Dosierung sehr schnell und dynamisch sich ändernden Wünschen an die Schüttgutzufuhr angepasst werden kann.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch eine erfindungsgemässe Vorrichtung zum Austragen von länglichen, grobschüttfähigen Produkten aus einem Behälter;
Figur 2 eine verkleinert dargestellte Seitenansicht der Vorrichtung gemäss Figur 1;
Figur 3 eine Seitenansicht der Vorrichtung gemäss Figur 2 in einer weiteren Gebrauchslage;
Figur 4 eine Seitenansicht eines weiteren Ausführungsbeispiels einer Vorrichtung gemäss Figur 1;
Figur 5 einen Querschnitt durch die Vorrichtung gemäss Figur 4 entlang Linie V-V;
Figur 6 eine perspektivische Ansicht eines Teils einer geöffneten Vorrichtung gemäss Figur 1;
Figur 7 eine perspektivische Ansicht einer teilweise geöffneten Vorrichtung gemäss Figur 1 in einem weiteren Ausführungsbeispiel;
Figur 8 eine Draufsicht auf ein Ausführungsbeispiel einer erfindungsgemässen Scheibe;
Figur 9 eine Draufsicht auf ein weiteres Ausführungsbeispiel einer erfindungsgemässen Scheibe.

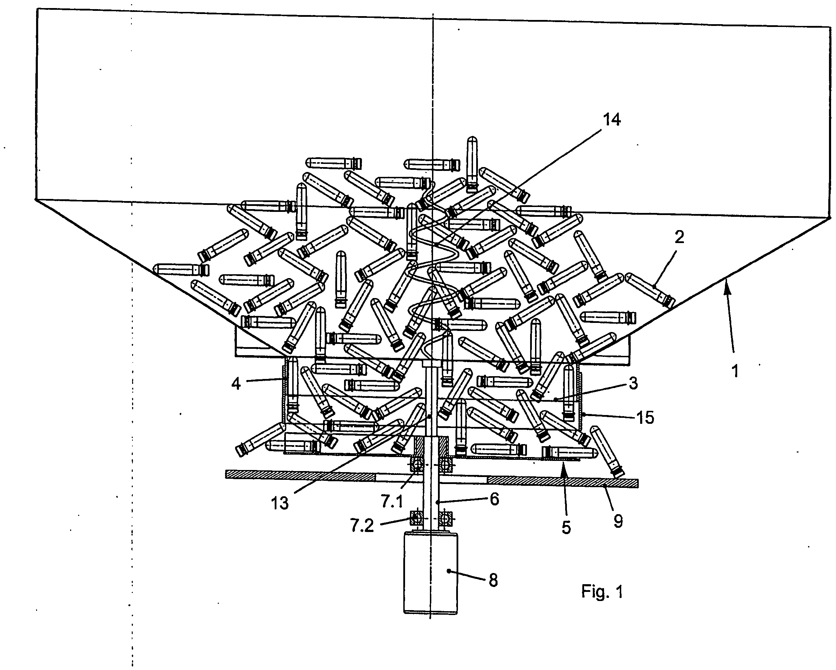

Gemäss Figur 1 befinden sich ungeordnet in einem Schüttguttrichter 1 eine Vielzahl von Preforms 2, die durch eine Austragsöffnung 3 ausgetragen werden sollen. Dabei umfängt ein Stutzen 4 des Schüttguttrichters 1 diese Austragsöffnung 3.

Unterhalb der Austragsöffnung 3 ist eine Scheibe 5 angeordnet, welche auf einer Drehwelle 6 aufsitzt. Die Drehwelle 6 dreht in zwei Lagern 7.1 und 7.2 und ist mit einem Antrieb 8 verbunden. Im übrigen wird die Drehwelle 6 spielfrei von einer Verteilfläche 9, die beispielsweise ebenfalls scheibenförmig ausgebildet ist, umfangen.

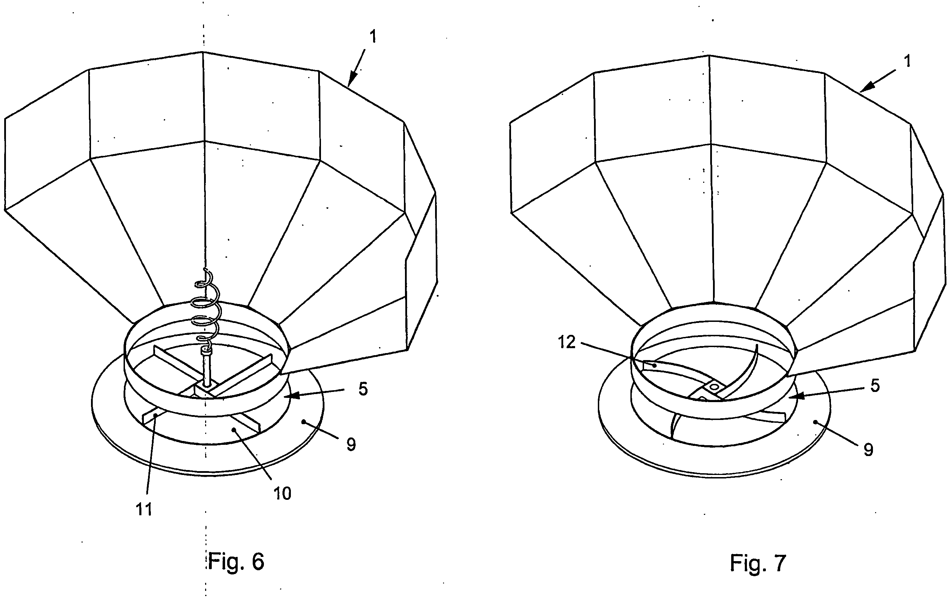

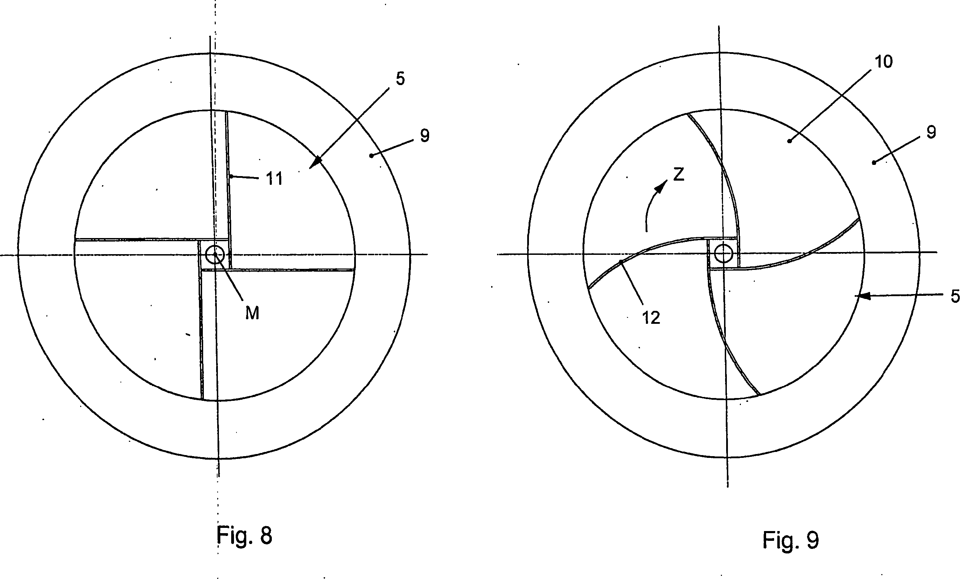

Auf einer Oberfläche 10 der Scheibe 5 sind Aufbauten aufgesetzt, die insbesondere in den Figuren 6 bis 9 näher gezeigt sind. Gemäss den Figuren 6 und 8 handelt es sich bei den Aufbauten um gerade Wandstreifen 11, welche exzentrisch zu einem Mittelpunkt M der Scheibe 5 angeordnet sind. Dagegen sind der Oberfläche 10 der Scheibe 5 gemäss den Figuren 7 und 9 gebogene Wandstreifen 12 aufgesetzt, wobei die Krümmung dieser Wandstreifen 12 einer Drehrichtung z der Scheibe 5 nachläuft.

In Figur 1 ist angedeutet, dass die Scheibe 5 drehfest auf der Drehwelle 6 aufsitzt. An die Drehwelle 6 schliesst ein Fortsatz 13 an, in den ein getwisteter Rührstab 14 stirnwärtig eingesetzt ist. Dieser getwistete Rührstab 14 bildet zwischen seinen beiden Enden einen sich erweiternden und verjüngenden Bauch aus.

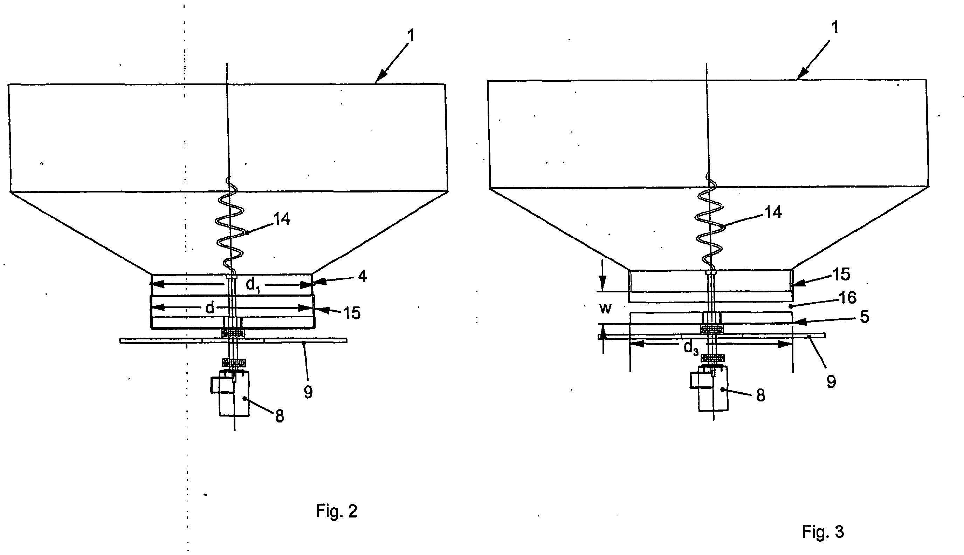

Des weiteren soll erfindungsgemäss dem Stutzen 4 eine Blende 15 aufgesetzt sein, die entlang dem Stutzen 4 verschiebbar ist. Die Blende 15 weist dabei einen etwas grösseren Durchmesser d auf, als der Durchmesser d₁ des Stutzens 4 (siehe Figur 2). Die Austragsöffnung 3 hat einen Durchmesser d₂, wobei dieser nicht sehr unterschiedlich von einem Durchmesser d₃ von der Scheibe 5 ist (siehe Figur 3). Durch ein Verschieben der Blende 15 entlang dem Stutzen 4, wird, wie in den Figuren 2 und 3 dargestellt, eine vertikale Öffnungsweite w einer Ringöffnung 16 zwischen Stutzen 4 und Scheibe 5 verändert.

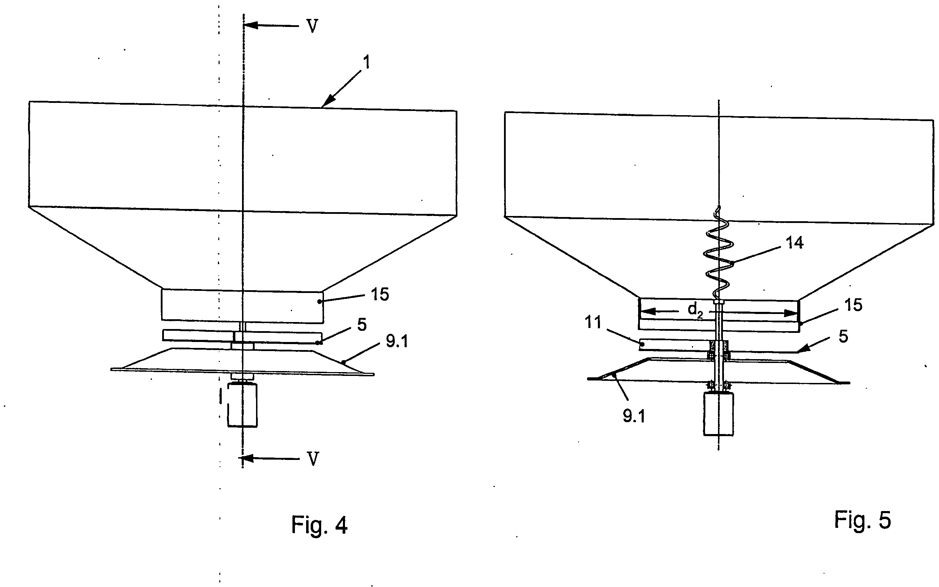

In den Figuren 4 und 5 ist gezeigt, dass die Verteilfläche nicht unbedingt eben ausgebildet sein muss, sondern auch als eine Kegelabschnittsfläche 9.1.

Die Funktionsweise der vorliegenden Erfindung ist folgende:

Aus einer nicht näher gezeigten Vorrichtung zum Herstellen von Preforms gelangen diese Preforms 2 als Schüttgut in den Schüttguttrichter 1. Aus diesem Schüttguttrichter 1 sollen die Preforms 2 ausgetragen und verteilt werden, beispielsweise mittels einer Vorrichtung, wie sie in der EP 05100893.6 beschrieben ist. Zum Verteilen dient eine Verteilfläche 9 bzw. eine Kegelabschnittsfläche 9.1, die ggf. rotieren kann.

Zum geordneten Austragen wird die Scheibe 5 in Drehbewegung in Drehrichtung z versetzt, was durch den Antrieb 8 bewirkt wird. Die Drehwelle 6 dreht dabei um ihre Mittelachse.

Bei der Drehung der Scheibe 5 werden Preforms von den Wandstreifen 11 bzw. 12 angegriffen, bewegt, gedreht usw., bis sie auf der Oberfläche 10 der Scheibe 5 aufliegen. Bei der Drehung der Scheibe 5 wandern dann die Preforms entlang den Wandstreifen 11 bzw. 12 nach aussen und fallen durch die Ringöffnung 16 auf die Verteilfläche 9 bzw. die Kegelabschnittsfläche 9.1. Dieses Wandern wird noch dadurch unterstützt, wenn die Wandstreifen 12 der Drehrichtung z nachlaufend gekrümmt ausgebildet sind, da dann auch eine geringere Drehzahl ausreicht, damit die Preforms 2 nach aussen laufen. Das gleiche gilt auch für die exzentrische Anordnung der geraden Wandstreifen 11. Durch eine Drehzahländerung der rotierenden Scheibe lässt sich die Menge der auszutragenden Preforms sehr exakt steuern. Eine maximale Drehzahl bedeutet auch eine maximale Austrittsmenge. Ist die Drehzahl 0, so wird kein Preform ausgetragen, der Austritt ist quasi gesperrt.

Durch ein Verschieben der Blende 15 entlang dem Stutzen 4 wird die Grösse der Ringöffnung 16 verändert. Bei kurzen Preforms wird die Öffnungsweite der Ringöffnung 16 verkleinert. Bei langen Preforms oder dickeren Preforms vergrössert.

Die rotierende Scheibe 5 bewirkt neben der Austragung der Preforms eine sanft drehende dynamische Säule aus Preforms, welche sich bis ins Innere des Schüttguttrichters 1 fortpflanzt und das Nachrutschen der Preforms gewährleistet. Versuche mit Preforms haben gezeigt, dass sich mit dieser Art der Austragung wesentlich grössere und höhere Behälter bauen lassen, als bis jetzt möglich war und dass die Austragung und das Nachrutschen auch bei sehr grossen Füllmengen und Füllhöhen gleichwertig gut ist.

Sollte es bei schüttgutfähigen Produkten zu Schwierigkeiten beim Nachrutschen in den Stutzen 4 kommen, bietet sich eine Zusatzeinrichtung an. Hierbei handelt es sich um einen Rührfinger, der in den Schüttguttrichter 1 eingreift. Bevorzugt handelt es sich dabei um einen getwisteten Rührstab, der beispielsweise mit der Drehwelle des Antriebs 8 verbunden ist. Mit der Steigung des Rührfingers und der passenden Drehrichtung wird eine Aufwärtsbewegung des Schüttguts bewirkt, wodurch beispielsweise ein Brückenbau des Schüttguts gelockert und ein Nachrutschen gesichert wird.

## Patentansprüche

1. Vorrichtung zum Austragen von länglichen, grobschüttfähigen Produkten (2) aus einem Behälter (1), insbesondere von PET-Flaschen-Rohlingen (Preforms) aus einem Schüttguttrichter mit einer Austragsöffnung (3), wobei der Austragsöffnung (3) eine rotierende Scheibe (5) zugeordnet ist,
**dadurch gekennzeichnet,**
**dass** zwischen Austragsöffnung (3) und Scheibe (5) eine verschiebbare Blende (15) vorgesehen ist, die eine runde oder polygonartige Ringöffnung (16) zwischen Austragsöffnung (3) und Scheibe (5) in ihrer vertikalen Weite (w) verändert.

2. Vorrichtung nach Anspruch 1, **dadurch gekennzeichnet, dass** der Durchmesser (d₃) der rotierenden Scheibe (5) in etwa dem Durchmesser (d₂) der Austragsöffnung (3) entspricht.

3. Vorrichtung nach Anspruch 1 oder 2, **dadurch gekennzeichnet, dass** die Drehzahl der rotierenden Scheibe (5) veränderbar ist.

4. Vorrichtung nach einem der Ansprüche 1 bis 3, **dadurch gekennzeichnet, dass** eine Oberfläche (10) der Scheibe (5) zur Austragsöffnung hin mit Aufbauten (11, 12) belegt ist.

5. Vorrichtung nach Anspruch 4, **dadurch gekennzeichnet, dass** die Aufbauten exzentrisch angeordnete Wandstreifen (11) und in Rotationsrichtung (z) nachlaufend ausgebildet sind.

6. Vorrichtung nach wenigstens einem der Ansprüche 1 bis 5, **dadurch gekennzeichnet, dass** die Blende (15) ein Ring ist, der einen Durchmesser (d) aufweist, welcher etwas grösser als der Durchmesser der Austragsöffnung (d₂) ist.

7. Vorrichtung nach wenigstens einem der Ansprüche 1 bis 6, **dadurch gekennzeichnet, dass** die Blende (15) verschiebbar zwischen Austragsöffnung (3) und Scheibe (5) angeordnet ist.

8. Vorrichtung nach wenigstens einem der Ansprüche 1 bis 7, **dadurch gekennzeichnet, dass** die Austragsöffnung (3) von einem Stutzen (4) umfangen ist, dem die Blende (15) verschiebbar aufsitzt.

9. Vorrichtung nach wenigstens einem der Ansprüche 1 bis 8, **dadurch gekennzeichnet, dass** durch die Auftragsöffnung (3) in den Behälter (1) ein bewegbarer Rührfinger (14) eingreift.

10. Vorrichtung nach Anspruch 9, **dadurch gekennzeichnet, dass** der Rührfinger ein getwisteter Rührstab (14) ist.

11. Vorrichtung nach Anspruch 10, **dadurch gekennzeichnet, dass** der getwistete Rührstab (14) einen Bauch ausbildet.

12. Vorrichtung nach wenigstens einem der Ansprüche 9 bis 11, **dadurch gekennzeichnet, dass** der Rührfinger (14) auf einer Drehwelle (6) aufsitzt.

13. Vorrichtung nach Anspruch 12, **dadurch gekennzeichnet, dass** auf der Drehwelle (6) auch die Scheibe (5) aufsitzt.

## Claims

1. A device for the discharging of elongate, coarse bulk products (2) from a container (1), in particular of PET bottle blanks (performs) from a bulk-material hopper with a discharge opening (3), a rotating disc (5) being associated with the discharge opening (3),
**characterised in that**
a displaceable screen (15) is provided between the discharge opening (3) and the disc (5), which screen changes the vertical width (w) of a round or polygonal annular opening (16) between the discharge opening (3) and the disc (5).

2. A device according to Claim 1, **characterised in that** the diameter (d₃) of the rotating disc (5) corresponds approximately to the diameter (d₂) of the discharge opening (3).

3. A device according to Claim 1 or 2, **characterised in that** the speed of the rotating disc (5) is changeable.

4. A device according to one of Claims 1 to 3, **characterised in that** a surface (10) of the disc (5) is equipped with attachments (11, 12) towards the discharge opening.

5. A device according to Claim 4, **characterised in that** the attachments are eccentrically arranged wall strips (11) and are formed to trail in the direction of rotation (z).

6. A device according to at least one of Claims 1 to 5, **characterised in that** the screen (15) is a ring which has a diameter (d) which is somewhat greater than the diameter of the discharge opening (d₂)

7. A device according to at least one of Claims I to 6, **characterised in that** the screen (15) is arranged displaceably between the discharge opening (3) and the disc (5).

8. A device according to at least one of Claims 1 to 7, **characterised in that** the discharge opening (3) is surrounded by a connecting piece (4) which is seated displaceably on top of the screen (15).

9. A device according to at least one of Claims 1 to 8, **characterised in that** a movable stirring finger (14) engages through the discharge opening (3) into the container (1).

10. A device according to Claim 9, **characterised in that** the stirring finger is a twisted stirrer rod (14).

11. A device according to Claim 10, **characterised in that** the twisted stirrer rod (14) forms a belly.

12. A device according to at least one of Claims 9 to 11, **characterised in that** the stirring finger (14) is seated on a rotary shaft (6).

13. A device according to Claim 12, **characterised in that** the disc (5) is also seated on the rotary shaft (6).

## Revendications

1. Dispositif pour déverser des produits allongés (2) pouvant être déchargés en masse d'un conteneur (1), en particulier des ébauches de bouteilles en PET (préformes) d'un entonnoir à produits en vrac, avec une ouverture de décharge (3), à l'ouverture de décharge (3) étant associé un disque rotatif (5),
**caractérisé par le fait**
**qu'**entre l'ouverture de décharge (3) et le disque (5) est prévu un obturateur (15) déplaçable qui fait varier quant à son diamètre vertical (w) une ouverture circulaire (16) ronde ou polygonale entre l'ouverture de décharge (3) et le disque (5).

2. Dispositif selon la revendication 1, **caractérisé par le fait que** le diamètre (d₃) du disque rotatif (5) correspond environ au diamètre (d₂) de l'ouverture de décharge (3).

3. Dispositif selon la revendication 1 ou 2, **caractérisé par le fait que** le nombre de tours du disque rotatif (5) est variable.

4. Dispositif selon l'une des revendications 1 à 3, **caractérisé par le fait qu'**un surface (10) du disque (5) est muni, en direction de l'ouverture de décharge, de surélévations (11, 12).

5. Dispositif selon la revendication 4, **caractérisé par le fait que** les surélévations sont des bandes de paroi (11) disposées de manière excentrique et réalisées successivement dans le sens de rotation (z).

6. Dispositif selon au moins l'une des revendications 1 à 5, **caractérisé par le fait que** l'obturateur (15) est une bague présentant un diamètre (d) qui est un peu plus grand que le diamètre de l'ouverture de décharge (d₂).

7. Dispositif selon au moins l'une des revendications 1 à 6, **caractérisé par le fait que** l'obturateur (15) est disposé de manière déplaçable entre l'ouverture de décharge (3) et le disque (5).

8. Dispositif selon au moins l'une des revendications 1 à 7, **caractérisé par le fait que** l'ouverture de décharge (3) est entourée d'une tubulure (4) sur laquelle l'obturateur (15) se trouve de manière déplaçable.

9. Dispositif selon au moins l'une des revendications 1 à 6, **caractérisé par le fait qu'**à travers l'ouverture de décharge (3) dans le récipient pénètre un doigt d'agitation (14) déplaçable.

10. Dispositif selon la revendication 9, **caractérisé par le fait que** le doigt d'agitation est une barre d'agitation (14) vrillée.

11. Dispositif selon la revendication 10, **caractérisé par le fait que** la barre d'agitation (14) vrillée forme un ventre.

12. Dispositif selon au moins l'une des revendications 9 à 11, **caractérisé par le fait que** le doigt d'agitation (14) se trouve sur l'arbre de rotation (6).

13. Dispositif selon la revendication 12, **caractérisé par le fait que** sur l'axe de rotation (6) se trouve également le disque (5).
